# EUROPÄISCHE PATENTANMELDUNG

(11) **EP 2 116 517 A1**
(43) Veröffentlichungstag der Anmeldung: **11.11.2009**
(21) Anmeldenummer: 09004088.2
(22) Anmeldetag: 23.03.2009
(51) Int. Cl.: C03C 17/00, C09D 1/00, C09D 5/38, C03C 17/38, C03C 17/34, C03C 17/42

(54) **Glaskeramikplatte mit Edelmetallbeschichtung**

(30) Priorität: 25.04.2008 DE 102008020895
(71) Anmelder: Schott AG, 55122 Mainz (DE)
(72) Erfinder: Striegler, Harald, Dr., 55437 Ockenheim (DE); Becker, Otmar, Dr., 63225 Langen (DE)
(74) Vertreter: Fleck, Hermann-Josef

(57) **Zusammenfassung**

Die Erfindung betrifft eine niedrig-ausdehnende Glaskeramikplatte, wobei auf mindestens einer Plattenseite mittelbar oder unmittelbar eine schwarze Beschichtung zumindest bereichsweise aufgebracht ist, wobei die Beschichtung Edelmetall enthält. Um eine solche Glaskeramikplatte blickdicht erzeugen zu können und sie dabei ausreichend thermisch stabil zu halten, ist es erfindungsgemäß vorgesehen, dass der Edelmetallanteil in der Beschichtung ≥ 50 Gew.-% beträgt, der Bismutoxidanteil in der Beschichtung höchstens 20 Gew.-% beträgt und dass die Schichtdicke der Beschichtung mindestens 200 nm beträgt.

## Beschreibung

### Stand der Technik

Die Erfindung betrifft eine Glaskeramikplatte, insbesondere eine Glaskeramikplatte für eine Kochmulde mit einer Plattenoberseite, die die Koch-Aufstellseite bildet und einer Plattenunterseite, die der Plattenoberseite abgewandt ist, wobei auf der Plattenunterseite mittelbar oder unmittelbar eine Beschichtung zumindest bereichsweise aufgebracht ist, wobei die Beschichtung Edelmetall enthält.

Die zurzeit erhältlichen, schwarzen Glaskeramikplatten bestehen entweder aus volumengefärbter schwarzer Glaskeramik oder aus farbloser Glaskeramik mit schwarzer Unterseitenbeschichtung. Da zunehmend elektronische Anzeigen in die Kochmulden integriert werden, erweisen sich volumengefärbte Glaskeramiken immer mehr als nachteilig, weil sie nur für rotes Licht hinreichend durchlässig sind. Die Gestaltung eines Displaybereichs mit einer bunten Displayanzeige, zum Beispiel aus verschiedenen LEDs oder bunten LCD-Bildsschirmen ist bei den gängigen volumengefärbten, translucenten Glaskeramiken (zum Beispiel CERAN HIGHTRANS^{®} und CERAN SUPREMA^{®}) nicht möglich.

Die Herstellung eines Displaybereichs, der die ein- oder mehrfarbige Anzeige von Informationen (Heizstufe, Kochrezepte etc.) ohne Farbeinschränkung zulässt, gelingt hingegen mit farblosen oder nahezu farblosen Glaskeramiken (zum Beispiel CERAN CLEARTRANS^{®} gemäß EP 1 837 314 A1), die unterseitig eine lichtundurchlässige Beschichtung tragen, durch einfaches Aussparen der unterseitigen Beschichtung im Bereich der Displayanzeige (JP2003-338359 A).

Die unterseitige Beschichtung dient dazu, den Blick in das Innere der Kochmulde (auf Kabel, Heizelemente, elektronische Bauteile und die Metallkonstruktion) zu verhindern. Je nach Anforderung, insbesondere hinsichtlich der thermischen Belastbarkeit, kann die Unterseitenbeschichtung aus einer oder mehreren Edelmetallschichten, Sol-Gel-Systemen, Siliconlacken etc. gebildet werden. Zur Herstellung schwarzer Kochflächen aus transparenter Glaskeramik werden zurzeit zwei Möglichkeiten genutzt:

Zum einen wird die Glaskeramik mit einer porösen Schicht aus Glas und thermisch stabilen, schwarzen Pigmenten (zum Beispiel Spinelle vom Typ Cr-Fe-Co-Mn) und darüber mit einer bis zur Blickdichte pigmentierten Siliconschicht versehen. Durch Aussparen beider Schichten im Displaybereich können beliebig farbige Anzeigen in die Glaskeramikplatte integriert werden. Diese Methode erlaubt zwar eine kostengünstige Herstellung, hat jedoch den Nachteil, dass derartige Glaskeramikplatten nicht für Temperaturbelastungen von dauerhaft 300°C (oder kurzzeitig über 500°C) geeignet sind, weil sich bei entsprechender thermischer Belastung das Beschichtungssystem aufgrund der Zersetzung des Silicons gräulich oder bräunlich verfärbt.

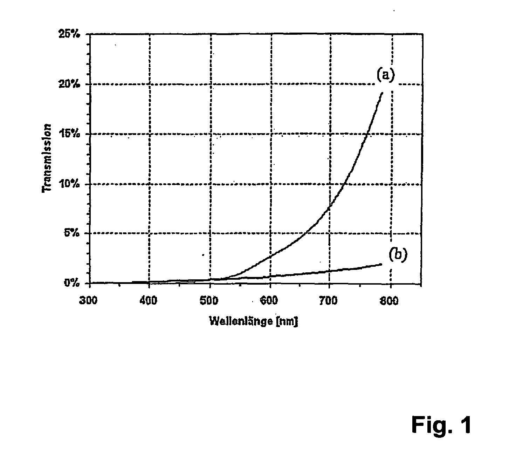

Zum anderen werden hochwertigere Glaskeramikplatten mit unterseitigen Beschichtungen auf der Basis von Edelmetallen eingesetzt (JP Kokoku H07-17409, zum Beispiel Edelmetallpräparat SL-900X-3). Aufgrund der metallisch-oxidischen Zusammensetzung sind schwarze Edelmetallschichten thermisch extrem stabil, so dass selbst bei mehrstündiger Belastung über 500°C keine Farbveränderung erfolgt. Die schwarzen Edelmetallschichten kommerziell erhältlicher Glaskeramikplatten setzen sich hauptsächlich zusammen aus Gold, Bismut und Eisen und haben eine Schichtdicke von 300 bis 800 nm. Bei derzeit kommerziell erhältlichen Kochflächen mit unterseitig schwarzer Edelmetallbeschichtung besteht die schwarze Edelmetallschicht im Wesentlichen aus höchstens 20 Gew.-% Gold, mehr als 25 Gew.-% Bismutoxid, mehr als 25 Gew.-% Eisenoxid und ca. 1 - 10 Gew.-% Titanoxid. Mit der bekannten Zusammensetzung und Schichtdicke wird eine Transmission von nur 1,5 % (τᵥᵢₛ bei Lichtart D65 gemäß DIN EN 410, Abb. 1, Kurve a) im Bereich des sichtbaren Lichts (380 bis 780 nm) erhalten. In der Literatur wird eine minimale mittlere Transmission von 1,7 - 2,2 % genannt (JP Kokoku H07-17409, US2007/0056961 A1). Die Lichtdurchlässigkeit der Edelmetallschichten ist demnach sehr gering (und vergleichbar mit der Transmission von volumengefärbten, schwarzen Glaskeramiken), so dass der Blick in das Innere einer Kochmulde in der Regel hinreichend unterbunden wird. Wie eingangs beschrieben kann zur Erzeugung eines Displaybereichs die schwarze Edelmetallschicht oberhalb der Displayanzeige (LED, LCD) ausgespart werden, wodurch ein- oder mehrfarbige Anzeigen innerhalb einer Kochfläche möglich sind.

Die zur Zeit eingesetzten, schwarzen Edelmetallfilme sind jedoch bei Bestrahlung mit Halogenlampen, wie sie heute in modernen Dunstabzugshauben eingesetzt werden, nicht vollkommen blickdicht, das heißt, man kann bei starker Beleuchtung durchaus noch im Innern der Kochmulde Einzelheiten wie Kabel erkennen. Auf dieses Problem wird bereits in JP2003-338359 (A) hingewiesen.

Aus diesem Grunde wird bei hochwertigen Kochflächen aus volumengefärbter Glaskeramik unterseitig eine bis zur Blickdichte pigmentierte Siliconbeschichtung als "Streulichtabdeckung" aufgebracht, die die Transmission im Bereich des sichtbaren Lichts auf 0 % absenkt, die Glaskeramikplatte also vollkommen blickdicht macht (DE 035 03 576 C2, DE 044 26 234 C1). Bei volumengefärbter, schwarzer Glaskeramik ist die Farbveränderung der Siliconschicht, die bei thermischer Belastung bis über 500 °C unvermeidbar ist, aus Benutzersicht (das heißt, bei Betrachtung der Glaskeramikplatte, wenn sie in die Kochmulde eingebaut ist) nicht erkennbar.

Bei farblosen Glaskeramiken mit unterseitiger, schwarzer Edelmetallbeschichtung, auf die eine bis zur Blickdichte pigmentierte Siliconschicht aufgebracht wurde, ist jedoch die Verfärbung der Siliconschicht nach thermischer Belastung (1 h bei 530 °C) aus Benutzersicht sehr wohl erkennbar, und zwar erscheint die Glaskeramikplatte aus Benutzersicht im thermisch belasteten Bereich (Heißbereich) dunkler als im umgebenden Kaltbereich. Die Farbveränderung ist besonders gut sichtbar, wenn die Glaskeramikplatte im Heißbereich oberseitig nur spärlich dekoriert ist, wie es dem aktuellen Trend entspricht, und wenn die Glaskeramikplatte bei diffusem Tageslicht betrachtet wird. Die weitere Verringerung der Transmission einer farblosen Glaskeramik-Kochfläche (Glaskeramikplatte), die unterseitig eine schwarze Edelmetallschicht trägt, durch eine bis zur Blickdichte pigmentierte Siliconschicht auf der Edelmetallschicht ist - ohne dass Farbveränderungen bei thermischer Belastung auftreten - daher derzeit nicht möglich.

Durch die Erhöhung der Schichtdicke der schwarzen Edelmetallschicht von dem üblichen Maß (300 - 800nm) auf über 800 nm (z.B. durch Einsatz eines gröberen Siebdruckgewebes) konnte ebenfalls keine vollkommene Blickdichte erreicht werden, weil die schwarze Edelmetallbeschichtung bei Schichtdicken über 800 nm rissig wurde, wodurch die Transmission nicht ab-, sondern zunahm und außerdem die Kochfläche selbst unansehnlich wurde. Die Risse beruhen zum einen auf Spannungen in der Edelmetallschicht selbst und zum anderen auf Spannungen zwischen der Glaskeramik und dem Edelmetallfilm aufgrund der unterschiedlich starken thermischen Ausdehnung beider Systeme.

Durch die Verwendung eines gröberen Siebdruckgewebes (zum Beispiel Siebweite 54 - 64) war es ferner nicht mehr möglich, konturenscharfe Kanten (beispielsweise bei der Aussparung des Displayfensters) zu drucken.

Es stellte sich daher die Aufgabe, eine farblose Glaskeramik-Kochfläche mit einer Beschichtung, insbesondere Unterseitenbeschichtung bereitzustellen, wobei die Unterseitenbeschichtung
- der Glaskeramikplatte ein schwarzes Aussehen verleihen soll
- zusammen mit der Glaskeramik eine blickdichte Glaskeramikplatte erzeugen soll, deren Transmission im Bereich des sichtbaren Lichts bei unter 1 % liegen soll (Tᵥᵢₛ ≤ 1 % bei Lichtart D65 gemäß DIN EN 410)
- farbstabil sein soll bei einer thermischen Belastung von dauerhaft 300 °C und kurzzeitig über 530 °C
- im Bereich von Displayanzeigen oder Sichtfenstern konturenscharf ausgespart werden kann
- in Verbindung mit der Glaskeramik alle übrigen Gebrauchseigenschaften, die für die Anwendung der Glaskeramikplatte als Kochfläche oder Sichtscheibe (zum Beispiel Kaminsichtscheibe) notwendig sind, erfüllt (insbesondere Kratzu. Haftfestigkeit, Farbstabilität gegenüber Klebstoff, Silberleitpaste, Lebensmitteln sowie Erhalt der mechanischen Festigkeit der Glaskeramikplatte).

### Lösung

Die blickdichte Unterseitenbeschichtung mit den gewünschten Eigenschaften kann durch die Erhöhung des Edelmetallanteils in dem Edelmetallpräparat und Änderung der Edelmetall- und Metall-Zusammensetzung des Edelmetallpräparats sowie unter Beachtung bestimmter Einbrandbedingungen bereitgestellt werden.

Als Substratmaterial für die erfindungsgemäß zu beschichtenden Glaskeramikplatten eignen sich besonders Glaskeramiken vom Typ Li₂O-Al₂O₃-SiO₂, z.B. farblose Glaskeramik mit einer thermischen Ausdehnung von -10 · 10⁻⁷ K⁻¹ bis +30 · 10⁻⁷ K⁻¹ in dem Temperaturbereich 30 - 500 °C, deren bekannte Zusammensetzung u.a. in der nachstehenden Tabelle 1 angegeben ist:

**Tab. 1 Zusammensetzung geeigneter Glaskeramik-Substrate**

| Element-oxid | Glaskeramik-Zusammensetzung [Gew.-%] | | |
|---|---|---|---|
| SiO₂ | 66-70 | 50-80 | 55-69 |
| Al₂O₃ | > 19,8-23 | 12-30 | 19-25 |
| Li₂O | 3-4 | 1-6 | 3- 4,5 |
| MgO | 0-1,5 | 0-5 | 0- 2,0 |
| ZnO | 1-2,2 | 0-5 | 0- 2,5 |
| BaO | 0-2,5 | 0-8 | 0- 2,5 |
| Na₂O | 0-1 | 0-5 | 0- 1,5 |
| K₂O | 0-0,6 | 0-5 | 0- 1,5 |
| TiO₂ | 2-3 | 0-8 | 1- 3 |
| ZrO₂ | 0,5-2 | 0-7 | 1- 2,5 |
| P₂O₅ | 0 - 1 | 0-7 | - |
| Sb₂O₃ | übliche Mengen | 0-4 | übliche Mengen |
| As₂O₃ | übliche Mengen | 0-2 | übliche Mengen |
| CaO | 0-0,5 | 0 | 0- 1,5 |
| SrO | 0-1 | 0 | 0- 1,5 |
| Nd₂O₃ | | | 0,004-0,4 |
| B₂O₃ | | | 0-1 |
| SnO₂ | | | 0-0,4 |
| Quelle | EP 1 170 264 B1 Ansprüche 14-18 | JP (A) 2004-193050 | EP 1 837 314 A1 |

Der schwarze Edelmetallfilm sollte mindestens zu 50 Gew.-% aus Gold und Platin bestehen (vor allem zur Erniedrigung der Transmission und zur Erzeugung des schwarzen Farbtons) und ferner Chromoxid und Bismutoxid (zur Bildung eines dichten, geschlossenen Films) sowie Siliciumoxid, Nickeloxid und evtl. Boroxid, Zirkonoxid, Rhodiumoxid oder andere Metalloxide als Haftvermittler enthalten.

Durch die Erhöhung des Edelmetallanteils auf 50 Gew.-% und mehr (bezogen auf die Gesamtzusammensetzung des eingebrannten Edelmetallfilms) kann beispielsweise mit einem Siebgewebe der Feinheit 100-40 in ausreichender Konturenschärfe eine Edelmetallschicht auf die Glaskeramikoberfläche aufgebracht werden, deren mittlere Transmission Tᵥᵢₛ (Glaskeramik mit Edelmetallschicht) bei weniger als 1 %, insbesondere bei nur 0,4 - 0,6 % (absolute Transmission unter 2 % bei 750 nm) liegt (Abb.1, Kurve b) und deren Schichtdicke (nach Einbrand) bei weniger als 450 nm, bevorzugt bei nur 240 - 380 nm liegt, so dass keine Risse auftreten.

Die eingebrannte Beschichtung sollte 40 - 60 Gew.-% Gold und 10 - 20 Gew.-% Platin enthalten sowie mindestens 2 Gew.-% und höchstens 8 Gew.-% Chromoxid, mindestens 5 % und höchstens 20 % Bismutoxid, mindestens 10 Gew.-% und höchstens 20 Gew.-% Siliciumoxid sowie 1 - 5 % Nickeloxid und 0 - 3 % Zirkonoxid, Boroxid oder andere Metalloxide, insbesondere von Metallen, die als Haftvermittler bei Edelmetallschichten bekannt sind (Landgraf, Günter, "Gold in Decoration of Glass and Ceramics, Kapitel 5, "Bonding and Adhesion", S. 167 ff in: Gold, Progress in Chemistry, Biochemistry and Technology., Hrsg.: H. Schmidbaur, 1999 John Wiley& Sons).

Die Metalle können in der Farbpaste als Sulforesinate, das Gold auch als Gold-(III)-chlorid-Lösung eingesetzt werden, wobei die Viskosität durch Zusatz weiterer Harze und Lösungsmittel optimal eingestellt werden kann. Bevorzugt wird für den Siebdruck eine Viskosität von 1000 - 2000 mPa · s (bei Schergefälle 200 s⁻¹). Die Beschichtung der Glaskeramikplatte kann aber auch mit anderen Verfahren, z.B. Sprühen, Tampondruck oder Stempelverfahren erfolgen. Prinzipiell ist es auch möglich, den Edelmetallfilm durch Sputtern aufzubringen. Jedoch ist die bei Sputter- oder Sprühverfahren notwendige Maskierungstechnologie zur Aussparung der Beschichtung im Displaybereich fertigungstechnisch aufwendig und daher eher nachteilig.

Der Einbrand des Edelmetallpräparats sollte bei möglichst niedriger Temperatur und kurzer Haltezeit bei der Maximaltemperatur erfolgen, damit eine gleichmäßig schwarze Unterseitenbeschichtung erhalten wird.

Damit die Unterseitenbeschichtung ausreichend kratzfest ist, muss die Maximaltemperatur jedoch mindestens 750 °C betragen.

Die Maximaltemperatur sollte 850 °C nicht übersteigen, da bei höherer Temperatur die Glaskeramik erweicht und je nach Größe der Platte unebene, mehr oder weniger verzogene Glaskeramikplatten erhalten werden.

Die Haltezeit bei der Maximaltemperatur sollte möglichst kurz (1 - 30 min) sein, da andernfalls hellgraue Flecken mit einer Ausdehnung von bis zu 30 cm bevorzugt in der Mitte großer (80 cm x 60 cm) Glaskeramik-Glaskeramikplatten auftreten. Die Haltezeit wird in der Regel durch die Homogenität des Ofens (die Temperaturverteilung im Einbrennofen) bestimmt. Sie sollte so gewählt werden, dass jede Stelle einer Platte wenigstens kurzzeitig (zum Beispiel 1 min) auf die Maximaltemperatur erhitzt wird. Die "hellgrauen Verfärbungen" beruhen auf der lokalen Häufung großer Hochquartz-Mischkristalle in der Glaskeramik aufgrund vermehrter Bildung und beschleunigten Wachstums der Kristalle in der Glaskeramikplattenmitte. Auslöser für das beschleunigte Wachstum und die vermehrte Bildung der Kristalle direkt unterhalb der glasigen Zone im Bulk der Glaskeramik ist das Bismut aus der Edelmetallschicht. Bismut diffundiert bei Temperaturen über 750 °C aus der Edelmetallschicht in die Glaskeramik, wobei es die ca. 100 - 300 nm dicke glasige Zone der Glaskeramik bei Temperaturen über 750 °C innerhalb von 90 - 120 min durchquert. Weil die glasige Zone an den Rändern einer Glaskeramikplatte dicker ist als in der Mitte, beschleunigt das Bismut, sobald es die glasige Zone durchquert hat und in das Bulk-Material der Glaskeramik vorgedrungen ist, zuerst in der Plattenmitte die Keimbildung und das Keimwachstum der Hochquartz-Mischkristalle. Da in den Bereichen mit erhöhter Kristallisation das Licht anders als in den unveränderten Bereichen gebrochen wird, treten letztendlich die als "graue Verfärbungen" bezeichneten Farbunterschiede auf. Homogen schwarze Glaskeramikplatten werden daher nur erhalten, wenn durch verkürzte Haltezeit bei der Maximaltemperatur und möglichst niedrige Maximaltemperatur die Diffusion des Bismuts in das Bulkmaterial der Glaskeramik verhindert wird.

Die Bildung grauer Flecken erfolgt nicht, wenn das o.g. Edelmetallpräparat kein Bismut enthält (das Bismut kann z.B. durch Bor ersetzt werden). Die erhaltenen, bismutfreien Edelmetallfilme sind dann zwar schwarz, jedoch von unerwünscht hoher Porosität, wodurch z.B. Klebstoff, der heute üblicherweise zum Verbinden der Glaskeramikplatten mit dem Metallgehäuse der Kochmulden verwendet wird, an den benetzten Bereichen der Glaskeramikplatte zu dunklen Verfärbungen führt, die aus Benutzersicht erkennbar sind. Vergleichbare Verfärbungen treten bereits bei Zimmertemperatur (20 °C) auch mit Silberleitpaste oder Lebensmitteln wie z.B. Speiseöl auf. Die Versiegelung einer derart porösen Edelmetallschicht mit einer Siliconfarbe führt bei anschließender thermischer Belastung (1 h 530 °C) der Siliconschicht ebenfalls zu einer dunklen Verfärbung, die aus Benutzersicht erkennbar ist.

Auf Bismut in der Edelmetallschicht kann daher nicht verzichtet werden, wenn ein schwarzer, geschlossener Edelmetallfilm erzeugt werden soll.

Im Gegensatz zu den porösen, bismutfreien Edelmetallfilmen kann durch die Hinterdruckung des erfindungsgemäß beschriebenen, bismuthaltigen, schwarzen Edelmetallfilms mit einer Siliconfarbe eine Glaskeramikplatte erhalten werden, die sowohl bei thermischer Belastung bis über 500 °C farbstabil ist, als auch außerordentlich beständig gegenüber der Einwirkung von Lebensmitteln ist.

Die Beständigkeit der schwarzen Kochfläche gegenüber Lebensmitteln kann z.B. bei Kochflächen für Gasanwendung notwendig sein, insbesondere wenn durch die Gasbrenner Temperaturen von bis zu 530 °C auf der Glaskeramikunterseite erzeugt werden. Bei Glaskeramikplatten für Gasanwendung können durch die Öffnungen in der Glaskeramik-Kochfläche, in deren Zentrum die Gasbrenner sitzen, Lebensmittel an die Unterseite der Glaskeramikplatte gelangen und dort einbrennen. Die bloße schwarze Edelmetallschicht würde an der verschmutzten Stelle durch die eingebrannten Lebensmittel schon nach kurzzeitigem Gebrauch der Kochmulde beschädigt, und aus Benutzersicht wäre im kontaminierten Bereich ein deutlicher Fleck sichtbar.

Wenn die schwarze Edelmetallschicht jedoch mit einer Siliconschicht (oder einer anderen organischen Beschichtung, z.B. aus Polyamid, Polyimid oder auch einer Sol-Gel-Schicht) hinterdruckt ist, treten bei derselben Belastung mit Lebensmitteln keine

Flecken auf, obwohl sich die organische Schutzschicht bei über 500 °C zersetzt. Offenbar bewirkt selbst die zersetzte Schutzschicht noch, dass Lebensmittel nicht in dem Maße an die Unterseite der Glaskeramikplatte gelangen können, um die Edelmetallschicht zu beschädigen.

Die Beständigkeit der Glaskeramikplatte bei hohen Temperaturen (ca. 350 - 500 °C) gegenüber Silberleitpaste kann notwendig sein, wenn z.B. bei Kochmulden für Induktionsanwendung im Heißbereich Temperatursensoren an die Unterseite der Glaskeramikplatte angebracht werden. Ohne eine weitere Beschichtung auf der schwarzen Edelmetallschicht würde bei thermischer Belastung durch die Silberleitpaste eine Farbveränderung der Beschichtung auftreten, die aus Benutzersicht erkennbar wäre. Mit einer Siliconschicht auf der schwarzen Edelmetallschicht verursacht die Silberleitpaste jedoch keine Farbveränderung, weil die Siliconschicht wie ein Abstandhalter zwischen der Leitpaste und der farbgebenden Edelmetallschicht liegt.

Gegenüber volumengefärbter, schwarzer Glaskeramik erwiesen sich unterseitig schwarz beschichtete Glaskeramiken ferner als vorteilhaft, wenn das Oberseitendekor einer solchen Glaskeramikplatte Effektpigmente enthält (Pfaff, Peter: Neue Möglichkeiten zur Dekoration von Glas, Keramik und Porzellan, Silikattechnik 42/6, 1991, S.196). Denn bei den beschriebenen, unterseitig schwarz beschichteten Glaskeramiken kommt der metallisch-irisierende Effekt des Oberseitendekors intensiver zur Geltung als bei schwarz volumengefärbten Glaskeramiken. In diesem Fall kann der Einsatz der erfindungsgemäßen, schwarzen Edelmetallbeschichtung auch ohne Aussparung für Displayanzeigen gewünscht sein.

Weitere, gestalterische Effekte können durch Kombination der schwarzen Edelmetallbeschichtung mit anderen Schichten (z.B. silber-, gold- oder kupferfarbenen Edelmetallschichten oder Emailschichten) erzeugt werden. So kann z.B. mit einer silbernen Edelmetallschicht zunächst ein Punktraster auf die Unterseite der Glaskeramikplatte aufgebracht werden, das dann mit der schwarzen Edelmetallfarbe hinterlegt wird.

Die schwarze Edelmetallfarbe kann nicht nur im Displaybereich für Displayanzeigen ausgespart werden, sondern auch im Heißbereich oder in der Nähe des Heißbereichs für andere Beleuchtungselemente, etwa wie in WO 2006/072388 A1 und DE 199 06 737 A1 beschrieben.

Eine weitere Ausführungsform besteht darin, die schwarze Edelmetallschicht aus zwei oder mehr Lagen aufzubauen, indem entsprechende Verdünnungen des erfindungsgemäß beschriebenen Edelmetallpräparats u.U. auch mit feinerem Siebgewebe als 100-40 (z.B. Siebweite 140-31) übereinander gedruckt werden. Durch teilweises Aussparen der ein oder anderen Farblage können nach Einbrand des Schichtsystems transparente Bereiche geschaffen werden, die sich farblich von den blickdichten oder weniger transparenten Bereichen unterscheiden (die transparenten Bereiche sind brauner). Die mittlere Transmission eines transparenteren Bereichs kann z.B. auf τᵥᵢₛ = 4 - 5 % eingestellt werden. Unterhalb eines solchen transparenteren Bereichs können - ähnlich wie in DE 10 2006 027 739 beschrieben -auch LEDs angeordnet werden, die dann nur im eingeschalteten Zustand sichtbar sind und im ausgeschalteten Zustand hinter der Edelmetallbeschichtung weitgehend verborgen bleiben.

### Ausführungsbeispiele

### Beispiel 1 ("Unterseitig schwarz beschichtete, blickdichte Glaskeramikplatte für eine Kochmulde")

Eine beidseitig glatte, farblose Glaskeramikplatte (ca. 80 cm lang, 60 cm breit und 4 mm dick) mit der Zusammensetzung gemäß EP 1 837 314 A1 (Tab.1, rechte Spalte) wurde oberseitig mit einer Dekorfarbe gemäß DE 197 21 737 C1 beschichtet und keramisiert.

Anschließend wurde auf die Unterseite der keramisierten Glaskeramikplatte das erfindungsgemäße Edelmetallpräparat (GPP 071006, Entwicklungsname Fa. Heraeus, Hanau) mittels Siebdruck (Siebweite 100-40) aufgebracht, wobei der Displaybereich ausgespart (unbeschichtet) blieb. Die Beschichtung wurde ca. 1 min bei 90 °C im Heißluftstrom getrocknet. Dann wurde die beschichtete Glaskeramik mit 3 K / min auf 800 °C erhitzt, bei 800 °C 10 min eingebrannt und dann mit 5 K / min auf 20 °C abgekühlt. Nach dem Einbrand war die Unterseite der Glaskeramikplatte homogen schwarz beschichtet.

Der Metallanteil der Farbe betrug 12 Gew.-% (88 Gew.-% Glühverlust). Der Edelmetallfilm setzte sich zusammen (in Gewichtsprozent) aus 50 % Gold, 17 % Platin, 14 % Bismutoxid, 11% Siliciumoxid, 5,0 % Chromoxid, 2,3 % Nickeloxid und 0,7 % Zirkonoxid.

Die Schichtdicke der eingebrannten Edelmetallbeschichtung betrug 300 ± 40 nm.

Die fertige Glaskeramikplatte wurde als Kochfläche in ein Kochfeld für Induktionsanwendung eingebaut.

Die Blickdichte wurde überprüft, indem die eingebaute Kochfläche bei einer Beleuchtung mit Halogenstrahlern, die in einer handelsüblichen Dunstabzugshaube integriert waren, betrachtet wurde. Da Strukturen im Inneren der Kochmulde selbst aus nächster Nähe (ca. 10 cm Abstand zur Kochflächenoberseite) nicht erkannt werden konnten, ist die Unterseitenbeschichtung blickdicht. Die spektrale Transmission der unterseitig beschichteten Glaskeramikplatte (ohne Oberseitendekor) betrug im Bereich des sichtbaren Lichts nur 0,5 % (τᵥᵢₛ bei Lichtart D65, gemäß DIN EN 410 berechnet aus Transmissionsverlauf gemäß Abb. 1, Kurve b).

Die Farbstabilität gegenüber Klebstoff wurde überprüft, indem ein 10 cm langer Klebstoffstrang (Pactan 7076) auf die Beschichtung gegeben und nach Herstellerangaben ausgehärtet wurde. Bei Betrachtung durch die Glaskeramik hindurch (aus Benutzersicht) wurde keine Farbveränderung festgestellt. Die Beschichtung ist daher ausreichend versiegelnd gegenüber Klebstoff.

Die Farbstabilität bei thermischer Belastung wurde überprüft, indem die beschichtete Glaskeramikplatte 95 Std. auf 415 °C und anschließend 1 h auf 530 °C erhitzt wurde. Bei dem anschließenden Vergleich des Farbtons der unbehandelten und der behandelten Probe mit dem normalsichtigen Auge konnte kein Farbunterschied festgestellt werden.

Der Farbton der beschichteten Glaskeramik wurde mit einem Spektralphotometer (Mercury 2000, Fa. Datacolor) bestimmt (Lichtart: D65, Beobachtungswinkel: 10°). Die Angabe der Farbwerte erfolgt nach dem CIELAB-System (DIN 5033, Teil 3 "Farbmaßzahlen"). Gemäß DIN 6174 betrug der Farbunterschied ΔE = 0,9.

**Tab. 2.: Farbwerte vor und nach thermischer Belastung**

| thermische Belastung | Farbwerte | | |
|---|---|---|---|
| | L* | a* | b* |
| nach Einbrand (Anlieferungszustand) | 39,0 | 1,1 | 7,1 |
| nach thermischer Belastung (95 h 415°C u. 1h 530°C) | 38,4 | 1,8 | 6,9 |

Auch die Haftfestigkeit der Beschichtung war nach der thermischen Belastung ausreichend. Sie wurde mit dem "Tesa-Test" geprüft, wobei auf die Unterseitenbeschichtung ein Streifen transparenten Klebefilms angerieben und dann ruckartig abgerissen wird (Tesafilm Typ 104, Beiersdorf AG). Da an dem Klebestreifen mit dem normalsichtigen Auge keine abgelösten Teilchen der Beschichtung festgestellt werden konnten, ist die Haftung der Beschichtung auf der Glaskeramik auch nach thermischer Belastung ausreichend.

Die Kratzfestigkeit der Beschichtung war ebenfalls ausreichend. Mit einer abgerundeten Metallspitze mit einem Krümmungsradius von 0,5 mm, die mit 500 g belastet war, konnten keine Kratzer erzeugt werden, die im eingebauten Zustand der Kochfläche von oben (aus Benutzersicht) erkennbar gewesen wären.

Die Biegefestigkeit der schwarz beschichteten Glaskeramik-Kochfläche lag auf dem für Kochflächen üblichen Niveau von mindestens 110 MPa (Mittelwert, bestimmt nach DIN EN 1288-5).

In dem Bereich, wo die schwarze Unterseitenbeschichtung ausgespart worden war, wurde eine LCD-Anzeige angebracht und betrieben. Weil in dem Displaybereich keine unterseitige Beschichtung vorhanden und weil die Glaskeramik (nahezu) farblos war, konnten Informationen in beliebigen Farben angezeigt werden.

### Beispiel 2 ("Unterseitig schwarz beschichtete Glaskeramikplatte für eine Kochmulde mit Siliconschutzschicht")

Eine Glaskeramikplatte mit Bohrungen für Gasbrenner wurde wie in Beispiel 1 mit der erfindungsgemäßen schwarzen Edelmetallbeschichtung versehen. Auf die schwarze Edelmetallschicht wurde dann zusätzlich mit Siebdruck (Siebgewebe 54-64) unterseitig eine Schicht aus einer hitzebeständigen, schwarzen Siliconfarbe (GSX, Fa. Daishin Paint) aufgebracht. Die Siliconfarbe wurde 5 min bei 180 °C getrocknet und anschließend 30 min bei 400 °C eingebrannt.

Die fertige Glaskeramikplatte wurde in ein Kochfeld für Gasanwendung eingebaut. Die Beständigkeit gegenüber eingebrannten Lebensmitteln wurde geprüft, indem die Kochflächenunterseite in der Nähe der Gasbrenner mit Lebensmitteln (Öl, SojaSoße) benetzt wurde (0,1 g Öl oder Sojasoße verteilt auf 9 cm²) und die Lebensmittel anschließend während des Betriebs des Gerätes bei maximaler Leistung eingebrannt wurden. Die Kochfläche wurde insgesamt dreimal an derselben Stelle mit Lebensmitteln benetzt und jeweils 1 h bei maximaler Leistung betrieben.

Anschließend wurde die Glaskeramikplatte von oben (aus Benutzersicht) in dem Bereich, wo die Lebensmittel aufgebracht worden waren, mit dem normalsichtigen Auge betrachtet und beurteilt, ob durch die eingebrannten Lebensmittel Flecken und ob durch die Temperaturbelastung Farbveränderungen erkennbar waren. Da aus Benutzersicht keine Schäden oder Farbveränderungen erkennbar waren, ist die schwarz beschichtete Glaskeramikplatte ausreichend beständig gegenüber eingebrannten Lebensmitteln.

Die Farbstabilität des Schichtsystems (schwarze Edelmetallschicht, hinterdruckt mit der Siliconschicht) wurde durch Vergleich des erhitzten Bereichs (Heißbereich der Kochfläche) mit dem nicht erhitzten Bereich (Kaltbereich der Kochfläche) überprüft. Mit dem normalsichtigen Auge war kein Farbunterschied erkennbar.

Ferner wurden die Farbwerte beider Bereiche mit einem Spektralphotometer (Mercury 2000, Fa. Datacolor) gemessen (Lichtart: D65, Beobachtungswinkel: 10°). Die Angabe der Farbwerte erfolgt nach dem CIELAB-System (DIN 5033, Teil 3 "Farbmaßzahlen"). Gemäß DIN 6174 betrug der Farbunterschied ΔE = 0,3.

**Tab.3: Farbwerte vor und nach thermischer Belastung**

| thermische Belastung | Farbwerte | | |
|---|---|---|---|
| | L* | a* | b* |
| nach Einbrand (Anlieferungszustand, "Kaltbereich") | 36,1 | 2,0 | 2,9 |
| nach thermischer Belastung (1 h 530 °C, "Heißbereich") | 36,1 | 1,9 | 3,2 |

Anmerkung: Die beiden Proben "im Anlieferungszustand" aus Beispiel 1 und 2 (Tab. 2 und Tab. 3) unterscheiden sich geringfügig im Farbton. Der Farbunterschied beruht auf prozessbedingten Farbunterschieden des Glaskeramik-Substrats.

In Fig. 1 ist eine Gegenüberstellung einer Glaskeramik gemäß dem Stand der Technik und eine erfindungsgemäße Glaskeramik dargestellt.

Dabei zeigt die Fig. 1 mit (a) bezeichnete Kurve die spektrale Transmission einer farblosen Glaskeramik gemäß dem Stand der Technik mit schwarzer Unterseitenbeschichtung auf Basis eines Edelmetallpräparats.

Die mit (b) bezeichnete Kurve zeigt die spektrale Transmission von CERAN CLEARTRANS^{®}, unterseitig schwarz beschichtet mit dem erfindungsgemäßen Edelmetallpräparat GPP 071006 (Heraeus, Hanau).

## Patentansprüche

1. Niedrig-ausdehnende Glaskeramikplatte, wobei auf mindestens einer Plattenseite mittelbar oder unmittelbar eine schwarze Beschichtung zumindest bereichsweise aufgebracht ist, wobei die Beschichtung Edelmetall enthält,
**dadurch gekennzeichnet,**
**dass** der Edelmetallanteil in der Beschichtung ≥ 50 Gew.-% beträgt, der Bismutoxidanteil in der Beschichtung höchstens 20 Gew.-% beträgt und dass die Schichtdicke der Beschichtung mindestens 200 nm beträgt.

2. Glaskeramikplatte nach Anspruch 1,
**dadurch gekennzeichnet,**
**dass** der Edelmetallanteil in der Beschichtung mindestens zu 65 Gew.-% aus Gold und Platin besteht.

3. Glaskeramikplatte nach Anspruch 2,
**dadurch gekennzeichnet,**
**dass** die Beschichtung 50- 60 Gew.-% Gold und 15 - 20 Gew.-% Platin enthält.

4. Glaskeramikplatte nach einem der Ansprüche 1 bis 3,
**dadurch gekennzeichnet,**
**dass** die Beschichtung Chromoxid enthält.

5. Glaskeramikplatte nach Anspruch 4,
**dadurch gekennzeichnet,**
**dass** der Chromoxidanteil in der Beschichtung mindestens 2 Gew.-% und höchstens 8 Gew.-% beträgt.

6. Glaskeramikplatte nach einem der Ansprüche 1 bis 5,
**dadurch gekennzeichnet,**
**dass** der Bismutoxidanteil in der Beschichtung mindestens 5 Gew.-% beträgt.

7. Glaskeramikplatte nach einem der Ansprüche 1 bis 6,
**dadurch gekennzeichnet,**
**dass** die Beschichtung Siliciumoxid, Nickeloxid und/oder Zirkonoxid und/oder Boroxid oder andere Metalloxide enthält.

8. Glaskeramikplatte nach Anspruch 7,
**dadurch gekennzeichnet,**
**dass** die Beschichtung einen Siliciumoxid-Anteil von mindestens 10 Gew.-% und höchstens 20 Gew.-% und/oder einen Nickeloxid-Anteil von mindestens 1 Gew.-% und maximal 5 Gew.-% und/oder einen Zirkonoxid-Anteil von maximal 3 Gew.-% aufweist.

9. Glaskeramikplatte nach einem der Ansprüche 1 bis 8,
**dadurch gekennzeichnet,**
**dass** die Schichtdicke der Beschichtung kleiner oder gleich 450 nm ist.

10. Glaskeramikplatte nach Anspruch 9,
**dadurch gekennzeichnet,**
**dass** die Schichtdicke der Beschichtung im Bereich zwischen 230 - 380 nm liegt.

11. Glaskeramikplatte nach einem der Ansprüche 1 bis 10,
**dadurch gekennzeichnet,**
**dass** auf die Beschichtung eine organische Schicht, insbesondere eine silikonhaltige Schicht, insbesondere eine Siliconfarbe oder eine polyamidhaltige oder eine polyimidhaltige oder eine Sol-Gel-Schicht mittelbar oder unmittelbar aufgebracht ist.

12. Glaskeramikplatte nach einem der Ansprüche 1 bis 11,
**dadurch gekennzeichnet,**
**dass** auf die Beschichtung zumindest bereichsweise eine thermisch leitende Schicht, insbesondere aus einer silberhaltigen Paste, aufgebracht ist.

13. Glaskeramikplatte nach einem der Ansprüche 1 bis 12,
**dadurch gekennzeichnet,**
**dass** auf der Plattenoberseite zumindest bereichsweise eine Dekorschicht aufgebracht ist, die Effektpigmente enthält.

14. Glaskeramikplatte nach einem der Ansprüche 1 bis 13,
**dadurch gekennzeichnet,**
**dass** zwischen der Beschichtung und mindestens einer Plattenseite zumindest bereichsweise eine Zwischenschicht angeordnet ist.

15. Glaskeramikplatte nach einem der Ansprüche 1 bis 14,
**dadurch gekennzeichnet,**
**dass** die Beschichtung aus zwei oder mehreren übereinander angeordneten Einzelschichten aufgebaut ist.

16. Verfahren zur Herstellung einer Glaskeramikplatte, wobei auf mindestens einer Plattenseite eine Beschichtung aufgebracht wird, die Edelmetall enthält,
**dadurch gekennzeichnet,**
**dass** die Beschichtung bei 20° - 150 ° getrocknet wird,
**dass** die getrocknete Schicht bei 750 ° - 850°C über eine Zeitdauer von weniger als 30 min. eingebrannt wird, und
**dass** die eingebrannte Beschichtung
- einen Edelmetallteil von ≥ 50 Gew.-%
- einen Bismutoxidanteil von höchstens 20 Gew.-%
- und einen Schichtdicke von mindestens 200 nm hat.

17. Verfahren nach Anspruch 16
**gekennzeichnet durch** einen der Ansprüche 2 bis 15.
